(19) Europäisches Patentamt
European Patent Office
Office européen des brevets

(11) EP 4 671 326 A1

(12) **EUROPEAN PATENT APPLICATION**
published in accordance with Art. 153(4) EPC

(43) Date of publication:
**31.12.2025 Bulletin 2026/01**

(21) Application number: **24760586.8**

(22) Date of filing: **22.02.2024**

(51) International Patent Classification (IPC):
***C08L 69/00*** (2006.01) ***C08L 55/02*** (2006.01)
***C08L 53/00*** (2006.01) ***C08K 3/04*** (2006.01)
***C08K 3/08*** (2006.01) ***C08K 7/00*** (2006.01)
***C08K 9/04*** (2006.01)

(52) Cooperative Patent Classification (CPC):
**C08K 3/04; C08K 3/08; C08K 7/00; C08K 9/04; C08L 53/00; C08L 55/02; C08L 69/00**

(86) International application number:
**PCT/KR2024/002313**

(87) International publication number:
**WO 2024/177397 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.02.2023 KR 20230024336**

(71) Applicant: **Samyang Corporation**
**Jongno-gu**
**Seoul 03129 (KR)**

(72) Inventors:
- **OH, Seok Bin**
  **Incheon 22188 (KR)**
- **KANG, Min Goo**
  **Daejeon 34022 (KR)**
- **KIM, Nung Hyun**
  **Jinju-si Gyeongsangnam-do 52790 (KR)**
- **AN, Tae Jin**
  **Seoul 06664 (KR)**
- **HAN, Jung Kyu**
  **Sejong 30092 (KR)**

(74) Representative: **Gleiss Große Schrell und Partner mbB**
**Leitzstraße 45**
**70469 Stuttgart (DE)**

# (54) METAL-TEXTURED THERMOPLASTIC RESIN COMPOSITION COMPRISING MINERAL FILLER, AND MOLDED PRODUCT COMPRISING SAME

(57) The present invention relates to a metal-textured thermoplastic resin composition comprising a mineral filler, and a molded product comprising same, and, more specifically, to a thermoplastic resin composition and a molded product comprising same, the composition comprising, in a specific content ratio, plate-like metal particles and a block copolymer, which comprises a polycarbonate resin, an acrylonitrile-butadiene-styrene resin, a flame retardant, a coal ash filler and a (meth) acrylic acid ester-based unit, and being capable of providing, when injection molded, a molded product which exhibits an excellent exterior by means of remarkable metal texture and a reduced weld line and, simultaneously, which has an excellent balance of dimensional stability, flame retardancy, impact resistance and heat resistance.

【FIGURE 1】

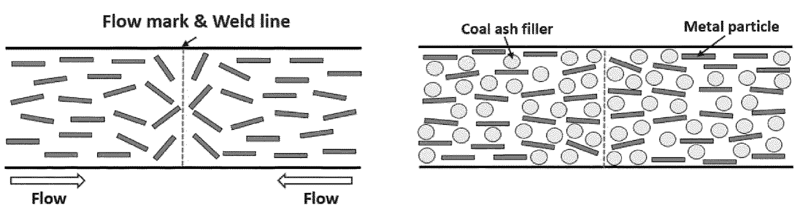




Processed by Luminess, 75001 PARIS (FR)

## Description

### TECHNICAL FIELD

The present invention relates to a thermoplastic resin composition with metal-like texture comprising mineral filler and a molded article comprising the same, and more specifically, to a thermoplastic resin composition which comprises a polycarbonate resin, an acrylonitrile-butadiene-styrene resin, a flame retardant, a coal ash filler, a block copolymer comprising (meth)acrylic acid ester-based unit, and plate-shaped metal particles with specific amount ratios, and can provide a molded article with excellent exterior due to remarkable metal-like texture and reduced weld lines during injection molding, and at the same time, well-balanced dimensional stability, flame retardancy, impact resistance and heat resistance, and a molded article comprising the same.

### BACKGROUND ART

Injection molding is one of application areas of thermoplastic resins with metal-like texture. Generally, thermoplastic resins are delivered to consumers as various products including electrical/electronic products and automotive parts after injection molding.

In case of injection molded articles with metal-like texture, the product exteriors are designed conventionally after injection molding through post-processing procedure such as painting. However, this is principally uneconomical due to the additional painting processing costs, and also the production costs increase according to masking, defects, and handling difficulties during the post-processing procedure. In addition, there are problems of harm to the human body and the environment due to the use of volatile organic compounds.

Accordingly, there is an increasing demand for eco-friendly materials free of paint, i.e., metallic materials capable of realizing an appearance with metal-like texture similar to metal painting by materials themselves even without a painting procedure, and for this, development of metallic materials wherein metal particles are applied to thermoplastic resin itself is continuously ongoing. In addition, according to the trend that molded articles used in electrical/electronic products such as TV, etc. are becoming thinner, dimensional stability and high impact strength characteristics are required for the molded articles.

In order to improve the appearance quality of paint-free molded articles with metal-like texture manufactured from a composition comprising a thermoplastic base resin and metal particles added thereto, a method of reducing flow marks and weld lines of the molded article by increasing the affinity between the base resin and the metal particles is being attempted. However, the molded articles obtained thereby lack impact resistance, flame retardancy and heat resistance, and in particular, their dimensional stability is poor, and so there is a limitation in applying them to parts such as back covers, bezels, etc. of TV and the like which are becoming thinner and more complex in design.

As an alternative, a method for improving mechanical properties while realizing an appearance with metal-like texture by double injection or extrusion of metallic layer onto molded article has been attempted. However, such a method has the disadvantage of process cost increase due to the double processing and pretreatment work therefor, and the problem of seriously lowered degree of freedom in product design.

### CONTENTS OF THE INVENTION

### PROBLEMS TO BE SOLVED

The purpose of the present invention is to provide a thermoplastic resin composition capable of providing a molded article which exhibits, even without a painting procedure, an appearance with metal-like texture close to product with metal painting, and reduced flow marks and weld lines, and also has well-balanced dimensional stability, flame retardancy, impact resistance and heat resistance at the same time, and a molded article comprising the same.

### TECHNICAL MEANS

One aspect of the present invention provides a thermoplastic resin composition comprising: (A) a polycarbonate resin; (B) an acrylonitrile-butadiene-styrene resin; (C) a flame retardant; (D) a coal ash filler; (E) a block copolymer comprising (meth)acrylic acid ester-based unit; and (F) plate-shaped metal particles, wherein, based on total 100 parts by weight of the composition, the amount of said component (A) is from more than 41.5 parts by weight to less than 71 parts by weight, the amount of said component (B) is from more than 5 parts by weight to less than 20 parts by weight, the amount of said component (C) is from more than 9 parts by weight to less than 17 parts by weight, the amount of said component (D) is from more than 8 parts by weight to less than 20 parts by weight, the amount of said component (E) is from more than 1 part by weight to less than 8 parts by weight, and the amount of said component (F) is from more than 0.5 part by weight to less

than 3 parts by weight.

According to the other aspect, the present invention provides a molded article comprising the thermoplastic resin composition of the present invention.

## EFFECT OF THE INVENTION

When the thermoplastic resin composition of the present invention is injection-molded, the distribution of the plate-shaped metal particles on the surface of the injection-molded article increases, and the coal ash in spherical shape acts to reduce weld lines, thereby providing the molded article with an excellent appearance of metal-like texture, while also improving its dimensional stability, flame retardancy, impact resistance and heat resistance, and thus it can be very usefully applied to molded articles, for example, back covers or bezels, etc. of TV, requiring an appearance with paint-free, metal-like texture and all of the above properties on excellent level.

## BRIEF EXPLANATION OF THE DRAWINGS

Figure 1 schematically illustrates a situation in which flow marks and weld lines occur in a molded article during injection molding of a conventional resin composition containing plate-shaped metal particles only (left view), and a situation in which flow marks and weld lines do not occur or are reduced during injection molding of a resin composition containing plate-shaped metal particles and coal ash filler (spherical) together according to an embodiment of the present invention (right view).

Figure 2 shows photographs of exemplary appearances, each corresponding to each of scores 1 to 5, respectively, in the appearance evaluation (weld line) performed in the examples and comparative examples of the present invention.

Figure 3 shows photographs of surfaces having various metal-like textures for each Flop index as measured so that the difference in metal-like texture according to the Flop index value can be confirmed.

## CONCRETE MODE FOR CARRYING OUT THE INVENTION

The present invention is explained in more detail below.

The thermoplastic resin composition of the present invention comprises: (A) a polycarbonate resin; (B) an acrylonitrile-butadiene-styrene resin; (C) a flame retardant; (D) a coal ash filler; (E) a block copolymer comprising (meth) acrylic acid ester-based unit; and (F) plate-shaped metal particles.

The thermoplastic resin composition of the present invention comprises, based on total 100 parts by weight of the composition, said (A) polycarbonate resin component in an amount of from more than 41.5 parts by weight to less than 71 parts by weight. If the amount of the component (A) in total 100 parts by weight of the composition is 41.5 parts by weight or less, the appearance of the molded article manufactured from the resin composition may become poor due to decreased metal-like texture and increased weld lines, and the dimensional stability may also become poor, and on the other hand, if the amount is 71 parts by weight or more, the weld lines of the molded article increase rapidly, resulting in very poor appearance, and the impact strength may also be very lowered.

In an embodiment, in total 100 parts by weight of the thermoplastic resin composition of the present invention, the amount of the component (A) may be, for example, more than 41.5 parts by weight, 41.6 parts by weight or more, 42 parts by weight or more, 42.5 parts by weight or more, 43 parts by weight or more, or 43.5 parts by weight or more, and it also may be less than 71 parts by weight, 70.9 parts by weight or less, 70 parts by weight or less, 69 parts by weight or less, 68 parts by weight or less, 67 parts by weight or less, or 66.5 parts by weight or less, but it is not especially limited thereto.

The thermoplastic resin composition of the present invention comprises, based on total 100 parts by weight of the composition, said (B) acrylonitrile-butadiene-styrene resin component in an amount of from more than 5 parts by weight to less than 20 parts by weight. If the amount of the component (B) in total 100 parts by weight of the composition is 5 parts by weight or less, the impact strength of the molded article manufactured from the resin composition may be very lowered, and if the amount is 20 parts by weight or more, the impact strength of the molded article may be very lowered, too.

In an embodiment, in total 100 parts by weight of the thermoplastic resin composition of the present invention, the amount of the component (B) may be, for example, more than 5 parts by weight, 5.1 parts by weight or more, 5.5 parts by weight or more, 6 parts by weight or more, 6.5 parts by weight or more, or 7 parts by weight or more, and it also may be less than 20 parts by weight, 19.9 parts by weight or less, 19.5 parts by weight or less, 19 parts by weight or less, 18.5 parts by weight or less, or 18 parts by weight or less, but it is not especially limited thereto.

The thermoplastic resin composition of the present invention comprises, based on total 100 parts by weight of the composition, said (C) flame retardant component in an amount of from more than 9 parts by weight to less than 17 parts by weight. If the amount of the component (C) in total 100 parts by weight of the composition is 9 parts by weight or less, the

flame retardancy of the molded article manufactured from the resin composition may become very poor, and on the other hand, if the amount is 17 parts by weight or more, the impact strength of the molded article may be very lowered and the heat resistance may also become poor.

In an embodiment, in total 100 parts by weight of the thermoplastic resin composition of the present invention, the amount of the component (C) may be, for example, more than 9 parts by weight, 9.1 parts by weight or more, 9.5 parts by weight or more, 10 parts by weight or more, 10.5 parts by weight or more, or 11 parts by weight or more, and it also may be less than 17 parts by weight, 16.9 parts by weight or less, 16.5 parts by weight or less, or 16 parts by weight or less, but it is not especially limited thereto.

The thermoplastic resin composition of the present invention comprises, based on total 100 parts by weight of the composition, said (D) coal ash filler component in an amount of from more than 8 parts by weight to less than 20 parts by weight. If the amount of the component (D) in total 100 parts by weight of the composition is 8 parts by weight or less, the appearance of the molded article manufactured from the resin composition may become very poor due to rapidly increased weld lines, and also the dimensional stability may become very poor and the impact strength may be very lowered, and on the other hand, if the amount is 20 parts by weight or more, the metal-like texture of the molded article may become very poor and the impact strength may also be lowered.

In an embodiment, in total 100 parts by weight of the thermoplastic resin composition of the present invention, the amount of the component (D) may be, for example, more than 8 parts by weight, 8.1 parts by weight or more, 8.5 parts by weight or more, 9 parts by weight or more, 9.5 parts by weight or more, or 10 parts by weight or more, and it also may be less than 20 parts by weight, 19.9 parts by weight or less, 19.5 parts by weight or less, 19 parts by weight or less, 18.5 parts by weight or less, or 18 parts by weight or less, but it is not especially limited thereto.

The thermoplastic resin composition of the present invention comprises, based on total 100 parts by weight of the composition, said (E) block copolymer component comprising (meth)acrylic acid ester-based unit in an amount of from more than 1 part by weight to less than 8 parts by weight. If the amount of the component (E) in total 100 parts by weight of the composition is 1 part by weight or less, the impact strength of the molded article manufactured from the resin composition may be very lowered, and on the other hand, if the amount is 8 parts by weight or more, the flame retardancy and heat resistance of the molded article may become very poor, and the dimensional stability may also become poor.

In an embodiment, in total 100 parts by weight of the thermoplastic resin composition of the present invention, the amount of the component (E) may be, for example, more than 1 part by weight, 1.1 parts by weight or more, 1.3 parts by weight or more, 1.5 parts by weight or more, 1.7 parts by weight or more, 1.9 parts by weight or more, or 2 parts by weight or more, and it also may be less than 8 parts by weight, 7.9 parts by weight or less, 7.5 parts by weight or less, 7 parts by weight or less, 6.5 parts by weight or less, 6 parts by weight or less, 5.5 parts by weight or less, or 5 parts by weight or less, but it is not especially limited thereto.

The thermoplastic resin composition of the present invention comprises, based on total 100 parts by weight of the composition, said (F) plate-shaped metal particle component in an amount of from more than 0.5 part by weight to less than 3 parts by weight. If the amount of the component (F) in total 100 parts by weight of the composition is 0.5 part by weight or less, the metal-like texture of the molded article may become very poor, and on the other hand, if the amount is 3 parts by weight or more, the impact strength of the molded article may be lowered.

In an embodiment, in total 100 parts by weight of the thermoplastic resin composition of the present invention, the amount of the component (F) may be, for example, more than 0.5 part by weight, 0.6 part by weight or more, 0.7 part by weight or more, 0.8 part by weight or more, 0.9 part by weight or more, or 1 part by weight or more, and it also may be less than 3 parts by weight, 2.9 parts by weight or less, 2.8 parts by weight or less, 2.7 parts by weight or less, 2.6 parts by weight or less, or 2.5 parts by weight or less, but it is not especially limited thereto.

The above components are explained in more detail below.

## (A) Polycarbonate resin

The polycarbonate resin, which can be comprised in the resin composition of the present invention, is preferably an aromatic polycarbonate resin, but there is no special limitation to its kind as long as the technical idea of the present invention can be realized thereby, and any thermoplastic aromatic polycarbonate resin conventionally used in this field can be used.

In an embodiment, the aromatic polycarbonate resin may be prepared from a dihydric phenol, a carbonate precursor and a molecular weight-controlling agent. The dihydric phenol is one of the monomers constituting the aromatic polycarbonate resin, and it may be a compound represented by the following chemical formula 1.

[Chemical formula 1]

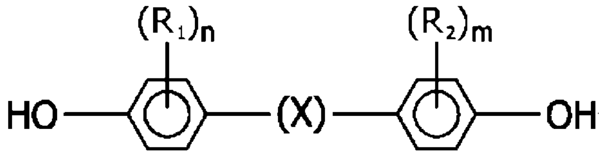

In the above chemical formula 1,

X represents a linear, branched or cyclic alkylene group having no functional group; or a linear, branched or cyclic alkylene group having one or more functional groups selected from the group consisting of sulfide group, ether group, sulfoxide group, sulfone group, ketone group, naphthyl group and isobutylphenyl group, and more specifically, X may be a linear alkylene group having 1 to 10 carbon atoms or a branched alkylene group having 3 to 10 carbon atoms, or a cyclic alkylene group having 3 to 10 carbon atoms;

each of $R_1$ and $R_2$ independently represents halogen atom, or an alkyl group, for example, a linear alkyl group having 1 to 20 carbon atoms, a branched alkyl group having 3 to 20 carbon atoms, or a cyclic alkyl group having 3 to 20 (preferably, 3 to 6) carbon atoms; and

each of n and m independently represents an integer of 0 to 4.

The non-limited example of the above dihydric phenol may be bisphenol (more specifically 2,2-bis(4-hydroxyphenyl)propane (=bisphenol A)), hydroquinone, 4,4'-dihydroxydiphenyl, bis(4-hydroxyphenyl)methane, 1,1-bis(4-hydroxyphenyl)cyclohexane, 2,2-bis(3,5-dimethyl-4-hydroxyphenyl)propane, bis(4-hydroxyphenyl)sulfide, bis(4-hydroxyphenyl)sulfone, bis(4-hydroxyphenyl)sulfoxide, bis(4-hydroxyphenyl)ketone, bis(4-hydroxyphenyl)ether, halogenated bisphenol such as 2,2-bis(3,5-dibromo-4-hydroxyphenyl)propane, bis(4-hydroxyphenyl)phenylmethane, bis(4-hydroxyphenyl)naphthylmethane, bis(4-hydroxyphenyl)-(4-isobutylphenyl)methane, 1,1-bis(4-hydroxyphenyl)ethane, 1-ethyl-1,1-bis(4-hydroxyphenyl)propane, 1-phenyl-1,1-bis(4-hydroxyphenyl)ethane, 1-naphthyl-1,1-bis(4-hydroxyphenyl)ethane, 1,2-bis(4-hydroxyphenyl)ethane, 1,10-bis(4-hydroxyphenyl)decane, 2-methyl-1,1-bis(4-hydroxyphenyl)propane, etc., and preferably bisphenol A may be used.

The carbonate precursor is another monomer constituting the aromatic polycarbonate resin, and its non-limited example may be carbonyl chloride (phosgene), carbonyl bromide, bis halo formate, diphenyl carbonate, dimethyl carbonate, etc., and preferably carbonyl chloride (phosgene) may be used.

As the molecular weight-controlling agent, the conventionally known compound, i.e., a monofunctional compound similar to a monomer used in preparation of thermoplastic aromatic polycarbonate resin may be used. The non-limiting examples of the molecular weight-controlling agent may be derivatives based on phenol (for example, para-isopropylphenol, para-tert-butylphenol (PTBP), para-cumylphenol, para-isooctylphenol, para-isononylphenol, etc.) aliphatic alcohols, etc., and preferably para-tert-butylphenol (PTBP) may be used.

The aromatic polycarbonate resin prepared from such dihydric phenol, carbonate precursor and molecular weight-controlling agent, may be, for example, linear polycarbonate resin, branched polycarbonate resin, copolycarbonate resin, polyestercarbonate resin, silicone copolymerized polycarbonate, etc., and such a resin alone or a mixture of two or more thereof may be used.

The aromatic polycarbonate resin may have a preferable viscosity average molecular weight (Mv, measured in methylene chloride solution) (g/mol) of 15,000 to 40,000, more preferably 17,000 to 30,000, and most preferably 20,000 to 30,000. If the viscosity average molecular weight of the aromatic polycarbonate resin is less than 15,000, mechanical properties such as impact strength, tensile strength, etc. may be lowered, and to the contrary, if it is greater than 40,000, melt viscosity increases, and thereby problems may be caused in resin processing.

## (B) Acrylonitrile-butadiene-styrene resin

For the resin composition of the present invention, any acrylonitrile-butadiene-styrene resin applicable to paint-free metallic material can be used without limitation.

In an embodiment, the acrylonitrile-butadiene-styrene resin may be acrylonitrile-butadiene-styrene (ABS) resin, modified acrylonitrile-butadiene-styrene (mABS) resin, or a mixture thereof, but it is not especially limited thereto.

## (C) Flame retardant

The flame retardant comprised in the resin composition of the present invention may be non-halogenated flame

retardant, and more specifically, it may be phosphorus-based flame retardant.

In an embodiment, non-limiting examples of the phosphorus-based flame retardant include phosphoric acid ester compound, and more specifically, phosphoric acid ester compound represented by the following chemical formula 2:

[Chemical formula 2]

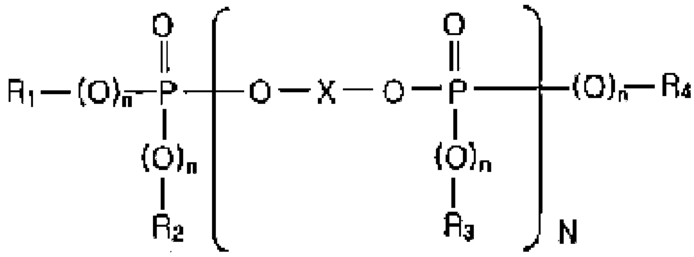

In the above chemical formula 2, $R_1$, $R_2$, $R_3$ and $R_4$ are each independently $C_1$-$C_8$ alkyl, $C_5$-$C_6$ cycloalkyl, $C_6$-$C_{20}$ aryl or $C_7$-$C_{20}$ aralkyl. Particularly preferred aryl group is cresyl, phenyl, xylenyl, propylphenyl or butylphenyl. n may independently be 0 or 1, preferably it is 1. N is 0 to 10, preferably 0.3 to 8, and more preferably 0.5 to 5. X is a mononuclear aromatic or polynuclear aromatic group having 6 to 30 carbon atoms, and preferably it may be diphenylphenol, bisphenol A, resorcinol or hydroquinone.

The phosphoric acid ester compound is also preferably a phosphoric acid ester compound of the following chemical formula 3:

[Chemical formula 3]

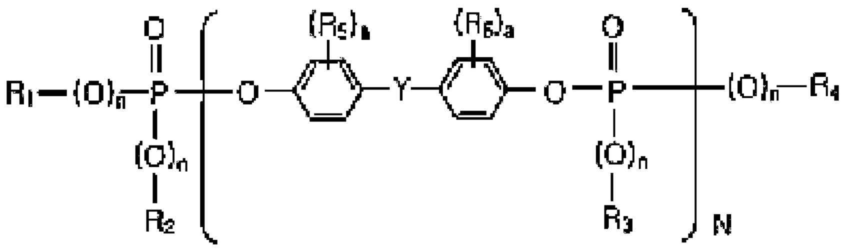

In the above chemical formula 3, $R_1$, $R_2$, $R_3$, $R_4$, n and N are the same as defined in the above chemical formula 2, Y represents $C_1$-$C_7$ alkylidene, $C_1$-$C_7$ alkylene, $C_5$-$C_{12}$ cycloalkylene, $C_5$-$C_{12}$ cycloalkylidene, -O-, -S-, -SO-, $-SO_2-$ or -CO-, and a represents an integer of 0 to 2. Preferably, Y is $C_1$-$C_7$ alkylidene, and more preferably, it is isopropylidene or methylene.

The phosphoric acid ester compound that can be used as the phosphorus-based flame retardant in the present invention may be a monophosphate (N=0), an oligophosphate (N=1 to 10), or a mixture of monophosphate and oligophosphate.

In an embodiment, as the phosphorus-based flame retardant, one or more selected from resorcinol bis(diphenyl phosphate), bisphenol A bis(diphenyl phosphate), or N,N'-bis[di-(2,6-xylyl)phosphoryl]-piperazine may be used.

**(D) Coal ash filler**

Coal ash generated at thermal power plants is a combustion waste resulting from the combustion of pulverized coal. It is generally divided into bottom ash, which is accumulated on the floor or walls of the combustion chamber and collected from the bottom of the combustion chamber, and fly ash, which is collected from the exhaust gas.

The coal ash used in the present invention means fly ash in a powdered state, and fly ash generated by combustion of coal can be classified or crushed according to particle size, and then used.

The coal ash is spherical particle, wherein the spherical particle includes particle that is not perfectly spherical. In an embodiment, the coal ash comprises particles having an aspect ratio (longest diameter/shortest diameter of the particle) of 1 to 1.8, and particles having such an aspect ratio may be present in a ratio of 80% or more of the total number of particles. The particle shape can be measured and evaluated by a conventional method in this technical field, for example, by analyzing an image taken with a scanning electron microscope (SEM).

In an embodiment, the coal ash may have an average particle size of 0.1 μm to 50 μm, more preferably 5 μm to 25 μm. If the particle size is too smaller than the above level, weld lines in the injection-molded article may become evident, and on the other hand, if the particle size is too larger than the above level, the unnotched impact strength may decrease to 40 or less.

The average particle size can be measured by a conventional method in this technical field, for example, by laser diffraction-type measurement of particle size distribution or image analysis.

In an embodiment, the coal ash may be surface-treated with a silane coupling agent. The silane coupling agent may be selected from, for example, alkylsilane coupling agent, aminosilane coupling agent, epoxysilane coupling agent, vinylsilane coupling agent, styryl silane coupling agent, acrylate silane coupling agent, ureido silane coupling agent, mercaptosilane coupling agent, isocyanate silane coupling agent, and sulfidosilane coupling agent, but it is not especially limited thereto.

For example, the alkylsilane coupling agent may be methyltrimethoxysilane, methyltriethoxysilane, hexyltrimethoxysilane, hexyltriethoxysilane, decyltriethoxysilane, decylmethyldiethoxysilane, octadecyltriethoxysilane, etc., but it is not especially limited thereto.

For example, the aminosilane coupling agent may be N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane, etc., but it is not especially limited thereto.

For example, the epoxysilane coupling agent may be 3-glycidyloxypropyltrimethoxysilane, 3-glycidyloxypropyltriethoxysilane, 3-glycidyloxypropylmethyldiethoxysilane, 3-glycidyloxypropyl(dimethoxy)methylsilane, glycidylbutyltrimethoxysilane, 2-(3,4-epoxycyclohexyl)ethyltrimethoxysilane, etc., but it is not especially limited thereto.

For example, the vinylsilane coupling agent may be vinylmethyldiethoxysilane, vinyltrimethoxysilane, vinyltriethoxysilane, vinyltriisopropoxysilane, etc., but it is not especially limited thereto.

For example, the styryl silane coupling agent may be p-styryltrimethoxysilane, etc., but it is not especially limited thereto.

For example, the acrylate silane coupling agent may be 3-acryloxypropyltrimethoxysilane, 3-methacryloxypropyltrimethoxysilane, 3-methacryloxypropyldimethoxysilane, 3-methacryloxypropyltriethoxysilane, 3-methacryloxypropyldiethoxysilane, etc., but it is not especially limited thereto.

For example, the ureido silane coupling agent may be 3-ureidopropyltriethoxysilane, etc., but it is not especially limited thereto.

For example, the mercaptosilane coupling agent may be 3-mercaptopropyltrimethoxysilane, 3-mercaptopropyltriethoxysilane, 3-mercaptopropylmethyldimethoxysilane, 11-mercaptoundecyltrimethoxysilane, etc., but it is not especially limited thereto.

For example, the isocyanate silane coupling agent may be 3-isocyanatepropyltrimethoxysilane, etc., but it is not especially limited thereto.

For example, the sulfidosilane coupling agent may be bis(triethoxysilylpropyl)disulfide, bis(triethoxysilylpropyl) tetrasulfide, etc., but it is not especially limited thereto.

In an embodiment, in order to improve the resin compatibility of the coal ash, the silane coupling agent may be used in an amount of 0.01 to 0.1 % by weight, based on the total weight of the coal ash, but it is not especially limited thereto.

## (E) Block copolymer comprising (meth)acrylic acid ester-based unit

For the resin composition of the present invention, any block copolymer comprising (meth)acrylic acid ester-based unit applicable to paint-free metallic material can be used without limitation.

In an embodiment, the (meth)acrylic acid ester may be methyl (meth)acrylate, ethyl (meth)acrylate, n-propyl (meth)acrylate, n-butyl (meth)acrylate, iso-butyl (meth)acrylate, tert-butyl (meth)acrylate, n-propyl (meth)acrylate, n-hexyl (meth)acrylate, 2-ethylhexyl (meth)acrylate, n-octyl (meth)acrylate, isooctyl acrylate, nonyl (meth)acrylate, isodecyl (meth)acrylate, lauryl (meth)acrylate, cetyl (meth)acrylate, stearyl (meth)acrylate, isostearyl acrylate, or a combination thereof, but it is not especially limited thereto.

In an embodiment, the block copolymer may comprise a block comprising methacrylic acid ester-based unit and a block comprising acrylic acid ester-based unit.

In an embodiment, the block copolymer may be XYX type, YXY type, (XY)n type, (YX)nY type, or X(YX)n type block copolymer, wherein X and Y are polymer blocks, and n represents an integer.

In an embodiment, the block copolymer may be XYX type triblock copolymer. The X block is a hard block having a higher glass transition temperature (Tg) than the Y block, and the Y is a soft block having a lower glass transition temperature (Tg) than the X block. In an embodiment, the Tg of the hard block X may be 30°C or higher, or 50°C or higher, and the Tg of the soft block Y may be 0°C or lower, or -20°C or lower.

In the XYX type triblock copolymer, the Xs on both outer sides may be the same or different, and may comprise methacrylic acid ester-based unit. The methacrylic acid ester may be, for example, methyl methacrylate, ethyl methacrylate, n-butyl methacrylate, 2-ethylhexyl methacrylate, lauryl methacrylate, or a combination thereof, but it is not especially limited thereto. In addition, in the XYX type triblock copolymer, Y may comprise acrylic acid ester-based unit, wherein the acrylic acid ester may be, for example, n-butylacrylate, methylacrylate, ethylacrylate, 2-ethylhexylacrylate, or a combination thereof, but it is not especially limited thereto.

In an embodiment, in the XYX type triblock copolymer, X may comprise poly(methyl methacrylate), and Y may comprise n-butylacrylate-based unit. For example, the block copolymer may be a triblock copolymer of poly(methyl methacrylate)-poly(n-butyl acrylate)-poly(methyl methacrylate).

In an embodiment, the weight average molecular weight (g/mol) of the block copolymer may be $10^3$ to $10^7$, more specifically $10^4$ to $10^6$, but it is not limited thereto.

The block copolymer is commercially available, and examples of such commercial products include Nanostrength M51, M52, M53, M22, 52N, 22N, SM4032XM10 from Arkema, KURARITY LA1114, LA2140e, LA2330, LA2250, LA4285 from Kuraray, etc.

## (F) Plate-shaped metal particles

There is no special limitation to the material of the plate-shaped metal particles comprised in the resin composition of the present invention, and the material of the metal particles can be selected depending on the metallic appearance required in the molded article to which the thermoplastic resin composition of the present invention is applied.

In an embodiment, the plate-shaped metal particles may be any metal or an alloy of any two or more metals, and specifically may be aluminum or an aluminum-based alloy, but it is not limited thereto. Additionally, the surface of the metal particles may be coated or surface treated, and in this case, silica or a silane coupling agent may be used as the coating or surface treatment agent, but it is not limited thereto.

In an embodiment, the average particle size of the plate-shaped metal particle component is 1 to 100 μm, more specifically 10 to 90 μm, and even more specifically 15 to 70 μm, but it is not limited thereto.

Also, in an embodiment, the thickness of the plate-shaped metal particle component may be 0.2 to 1 μm, more specifically 0.4 to 1 μm, but it is not especially limited thereto. In addition, in an embodiment, the aspect ratio of the plate-shaped metal particle component may be 8 to 120.

## Optional components that can be used further

In addition to the above-explained components, the resin composition of the present invention may further comprise one or more other additives conventionally used in thermoplastic resin compositions.

In an embodiment, the resin composition of the present invention may further comprise a fluidizing agent to improve the metal-like texture by improving the fluidity of the composition, and workability at the same time.

Any fluidizing agent applicable to thermoplastic resin compositions can be used without limitation, and for example, methyl methacrylate-based compound, naphthalene-based compound, lignin-based compound, ethylene vinyl acetate-based compound, melamine-based compound, polycarboxylic acid-based compound, or a mixture of two or more thereof may be used, but it is not especially limited thereto.

When the resin composition of the present invention further comprises a fluidizing agent, its amount based on total 100 parts by weight of the composition may be, for example, 1 part by weight or more, 1.5 parts by weight or more, or 2 parts by weight or more, and it also may be 5 parts by weight or less, 4.5 parts by weight or less, or 4 parts by weight or less, but it is not especially limited thereto.

In an embodiment, the resin composition of the present invention may further comprise a light diffusion agent.

The light diffusion agent that can be comprised in the resin composition of the present invention may be organic or inorganic particle, and more specifically, the organic particle may be acryl-based (e.g., methyl methacrylate (MMA)) crosslinked particle, silicone-based crosslinked particle, styrene-based crosslinked particle or a mixture of two or more thereof, and the inorganic particle may be calcium carbonate particle, barium sulfate particle, titanium oxide particle, aluminum hydroxide particle, silica particle, glass particle, mica particle, magnesium oxide particle, zinc oxide particle or a mixture of two or more thereof, but it is not especially limited thereto. The organic particle and inorganic particle may be used alone or in combination of two or more thereof.

In an embodiment, the average particle size of the light diffusion agent component may be 3 to 60 μm, more specifically 3 to 20 μm, even more specifically 3 to 10 μm, and even more specifically 3 to 5 μm.

When the resin composition of the present invention further comprises a light diffusion agent, its amount based on total 100 parts by weight of the composition may be, for example, 0.05 to 5 parts by weight, and more specifically, 0.5 to 2 parts by weight, but it is not especially limited thereto.

In addition to the above-explained components, the resin composition of the present invention may further

comprise one or more other additives conventionally used in thermoplastic resin compositions for injection molding or extrusion molding. The resin composition of the present invention may further comprise, for example, one or more additives selected from the group consisting of inorganic filler, antioxidant, lubricant, ultraviolet absorber, light stabilizer, impact modifier, matting agent, release agent, nucleating agent, antistatic agent, pigment, dye, or mixtures of two or more thereof.

Specifically, the inorganic filler may be plate-shaped glass, mica, graphite, talc, pearl particle, wollastonite, $TiO_2$ or a combination thereof, and more specifically, it may be $TiO_2$. In addition, the inorganic filler may have an average particle diameter of 10 to 200 μm and a thickness of 0.1 to 10 μm.

Specifically, the antioxidant may be phenol-based compound, phosphite-based compound, thioester-based compound, or a mixture of two or more thereof.

Specifically, the lubricant may be polyethylene-based compound, ethylene-ester-based compound, ethylene glycol-glycerin ester-based compound, montan-based compound, ethylene glycol-glycerin montan acid ester-based compound, or a mixture of two or more thereof.

As the ultraviolet absorber, any commercially available product may be used without special limitation.

Specifically, the light stabilizer may be benzotriazole-based compound, hydroxyphenyltriazine-based compound, pyrimidine-based compound, cyanoacrylate-based compound, or a mixture of two or more thereof.

Specifically, the matting agent may be inorganic or organic, and more specifically, the inorganic matting agent may be silica, magnesium oxide, zirconia, alumina, titania, or a mixture of two or more thereof, and the organic matting agent may be crosslinked vinyl copolymer, and the monomer of the vinyl copolymer may be one or more selected from styrene, acrylonitrile, methyl (meth)acrylate, ethyl (meth)acrylate, or butyl (meth)acrylate, etc.

The amount of the above other additive is not especially limited, and it is possible to use an amount that can be used to provide additional functions to the thermoplastic resin composition of the present invention within a scope that does not impair the desired physical properties. For example, the amount of each of the above other additives may be 0.05 to 5 parts by weight, and more specifically, 0.5 to 2 parts by weight, based on total 100 parts by weight of the composition, but it is not especially limited thereto.

In an embodiment, the thermoplastic resin composition of the present invention may have Flop index of 12 or more (e.g., 12 to 18).

In an embodiment, the thermoplastic resin composition of the present invention may exhibit flame retardancy property of V-0 at a thickness of 1.5 mm in a UL94 flame retardancy test.

In an embodiment, the thermoplastic resin composition of the present invention may have an impact strength (Izod, Unnotched type) of 70 kgf*cm/cm or more (e.g., 70 to 100 kgf*cm/cm), and more specifically, 80 kgf*cm/cm or more (e.g., 80 to 100 kgf*cm/cm), measured according to ASTM D256.

In an embodiment, the thermoplastic resin composition of the present invention exhibits excellent dimensional stability, with a mold shrinkage of 0.3% or less measured for a 3 mm specimen according to ASTM D955.

According to the other aspect of the present invention, a molded article comprising the thermoplastic resin composition of the present invention is provided.

The molded article may be an extrusion-molded article or an injection-molded article of injection molding, and more preferably it may be an injection-molded article.

The present invention is explained in more detail through the following Examples. However, the scope of the present invention is not limited thereby in any manner.

## [EXAMPLES AND COMPARATIVE EXAMPLES]

The components used in Examples and Comparative Examples of the present invention are explained below.

(A): Aromatic polycarbonate resin prepared from bisphenol A and phosgene (melt index: 34 g/10 min, viscosity average molecular weight: 17,000) (TRIREX 3017PJ, Samyang Corporation)

(B): Acrylonitrile-butadiene-styrene (ABS) resin (melt index (220°C/10 kg): 35) (Terluran® GP-35, BASF)

(C): Non-halogenated, phosphorus-based flame retardant (metal phosphinate) (Exolit OP1240, Clariant)

(D): Spherical porous fly ash treated with long-chain alkyl silane (average particle size: 25 μm, recycled product, Yedam Chemical)

(D-Comp.): Talc

(E): Block copolymer comprising (meth)acrylic acid ester-based unit (linear methyl methacrylate/butylacrylate triblock copolymer) (LA4285, Kurary)

(E-Comp.): Core/shell-type methacrylate-butadiene-styrene (MBS) impact modifier (EM500, LG Chem)

(F): Amorphous plate-shaped aluminum particles (average particle size: 20 μm) (Eckart)

(F-Comp.1): Spherical aluminum particles (average particle size: 30 μm) (Silver-line)

(F-Comp.2): Spherical glass bead particles (average particle size: 100 μm)

**Examples 1 to 11 and Comparative Examples 1 to 16**

The components with the amounts shown in Table 1 below were mixed with a Henschel mixer and uniformly dispersed, and then extruded in a twin-axes melting-kneading extruder with L/D=48 and Φ=25 mm under the conditions of melting temperature of 220°C, screw rotation speed of 200 rpm, first vent pressure of approximately -600 mmHg, and self-feeding speed of 20 kg/h. The extruded strands were cooled in water and then cut by rotating cutter to prepare pellets. The prepared pellets were dried with hot air at 70°C to 90°C for 4 hours, and then subjected to injection molding at a temperature of 260°C to 280°C to prepare specimens. For the injection-molded specimens for metal-like texture and appearance evaluation (weld line), rectangular multi-stage specimens in 900 mm × 650 mm size were prepared.

**Evaluation of Properties**

The properties of each specimen prepared above were measured or evaluated by the methods explained below, and the results thereof are shown in Table 2 below.

(1) Metal-like texture

Flop index was measured using a BYK-Mac i Spectrophotometer from BYK. Concretely, the luminance of reflected light was measured at angles of 15°, 45°, and 110° for the normal area and weld-generated area of the injection molded specimens prepared from the thermoplastic resin compositions of Examples and Comparative Examples, and then Flop index was calculated by using the following equation 1.

[Equation 1]

$$Flop\ Index = \frac{2.69(L^*_{15°}-L^*_{110°})^{1.11}}{(L^*_{45°})^{0.86}}$$

$L^*_{15°}$ = Luminance of reflected light measured at an angle of 15°
$L^*_{45°}$ = Luminance of reflected light measured at an angle of 45°
$L^*_{110°}$ = Luminance of reflected light measured at an angle of 110°

The Flop index of an object surface without metal-like texture is 0, the Flop index of an actual metal surface is 15 or higher (e.g., 15 to 17), and the Flop index of a surface that can be perceived as having a metal-like texture with the naked eye is 6.5 or higher. If the Flop index is 12 or higher, it is determined that the desired level of metal-like texture has been implemented.

Figure 3 shows photographs representing each Flop index measured for a surface with a metal-like texture, and the metal-like texture according to the Flop index value can be confirmed thereby.

(2) Appearance evaluation (weld line)

The appearance was evaluated by observation with the naked eye. Concretely, for injection molded specimens prepared from the thermoplastic resin compositions of Examples and Comparative Examples, the weld lines of the specimens were observed with the naked eye by 10 test subjects and evaluated on a scale of 1 to 5, and the average value of the 10 test subjects was recorded. A higher score indicates a thicker and darker weld line, indicating a poorer appearance. A score of 2 or lower is considered that the desired appearance has been achieved.

Figure 1 schematically illustrates a situation in which flow marks and weld lines occur in a molded article during injection molding of a conventional resin composition containing plate-shaped metal particles only (left view), and a situation in which flow marks and weld lines do not occur or are reduced during injection molding of a resin composition containing plate-shaped metal particles and coal ash filler (spherical) together according to an embodiment of the present invention (right view), and Figure 2 shows photographs of exemplary appearances, each corresponding to each of scores 1 to 5, respectively, in the appearance evaluation (weld line).

(3) Dimensional stability

In order to evaluate the dimensional stability of injection-molded specimens prepared from the thermoplastic

resin compositions of the Examples and Comparative Examples, the mold shrinkage (unit: %) was measured for 3 mm specimens according to ASTM D955. Concretely, specimens measuring 350 mm (width) x 100 mm (length) x 3 mm in thickness were injection-molded under the same conditions as above, kept in an atmosphere of 23°C and 50% relative humidity for 24 hours, and then measured using a 3D measuring machine to calculate the mold shrinkage. It is considered that the lower mold shrinkage means the better dimensional stability.

(4) Flame retardancy

Measurements were made using 1.5 mm-thick specimens according to the UL94 V test method.

(5) Heat resistance

The heat distortion temperature (HDT, unit: °C) was measured according to ASTM D648.

(6) Impact strength (kgf*cm/cm)

The impact strength (Izod, Unnotched type) of injection-molded specimens prepared from each of the thermoplastic resin compositions of the Examples and Comparative Examples was measured according to ASTM D256.

(7) Melt index (g/10 min)

The melt index (MI) was calculated by measuring the amount of resin composition flowing out over 5 minutes at 300°C using a 1.2 kg weight according to ASTM D1238.

[Table 1]

| Component | Example (amount unit: part by weight) | | | | | | | | | | |
|---|---|---|---|---|---|---|---|---|---|---|---|
| | 1 | 2 | 3 | 4 | 5 | 6 | 7 | 8 | 9 | 10 | 11 |
| (A) | 56.5 | 58.5 | 54.5 | 59.5 | 54.5 | 58.5 | 54.5 | 57 | 56 | 43.5 | 66.5 |
| (B) | 10 | 10 | 10 | 10 | 10 | 10 | 10 | 10 | 10 | 18 | 7 |
| (C) | 14 | 12 | 16 | 14 | 14 | 14 | 14 | 14 | 14 | 16 | 11 |
| (D) | 15 | 15 | 15 | 12 | 17 | 15 | 15 | 15 | 15 | 18 | 10 |
| (D-Comp.) | - | - | - | - | - | - | - | - | - | - | - |
| (E) | 3 | 3 | 3 | 3 | 3 | 2 | 5 | 3 | 3 | 3 | 3 |
| (E-Comp.) | - | - | - | - | - | - | - | - | - | - | - |
| (F) | 1.5 | 1.5 | 1.5 | 1.5 | 1.5 | 1.5 | 1.5 | 1 | 2 | 1.5 | 2.5 |
| (F-Comp.1) | - | - | - | - | - | - | - | - | - | - | - |
| (F-Comp.2) | - | - | - | - | - | - | - | - | - | - | - |

[Table 1] (continued)

| Component | Comparative Example (amount unit: part by weight) | | | | | | | |
|---|---|---|---|---|---|---|---|---|
| | 1 | 2 | 3 | 4 | 5 | 6 | 7 | 8 |
| (A) | 62.5 | 52.5 | 63.5 | 51.5 | 56.5 | 58.5 | 51.5 | 54.5 |
| (B) | 10 | 10 | 10 | 10 | 10 | 10 | 10 | 10 |
| (C) | 8 | 18 | 14 | 14 | 14 | 14 | 14 | 14 |
| (D) | 15 | 15 | 8 | 20 | - | 15 | 15 | 15 |
| (D-Comp.) | - | - | - | - | 15 | - | - | - |
| (E) | 3 | 3 | 3 | 3 | 3 | 1 | 8 | - |
| (E-Comp.) | - | - | - | - | - | - | - | 5 |

(continued)

| Component | Comparative Example (amount unit: part by weight) | | | | | | | |
|---|---|---|---|---|---|---|---|---|
| | 1 | 2 | 3 | 4 | 5 | 6 | 7 | 8 |
| (F) | 1.5 | 1.5 | 1.5 | 1.5 | 1.5 | 1.5 | 1.5 | 1.5 |
| (F-Comp.1) | - | - | - | - | - | - | - | - |
| (F-Comp.2) | - | - | - | - | - | - | - | - |

[Table 1] (continued)

| Component | Comparative Example (amount unit: part by weight) | | | | | | | |
|---|---|---|---|---|---|---|---|---|
| | 9 | 10 | 11 | 12 | 13 | 14 | 15 | 16 |
| (A) | 57.5 | 55 | 56.5 | 58 | 37.5 | 71 | 61.5 | 41.5 |
| (B) | 10 | 10 | 10 | 10 | 20 | 7 | 5 | 25 |
| (C) | 14 | 14 | 14 | 14 | 17 | 9 | 14 | 14 |
| (D) | 15 | 15 | 15 | 15 | 18 | 10 | 15 | 15 |
| (D-Comp.) | - | - | - | - | - | - | - | - |
| (E) | 3 | 3 | 3 | 3 | 5 | 2 | 3 | 3 |
| (E-Comp.) | - | - | - | - | - | - | - | - |
| (F) | 0.5 | 3 | | | 2.5 | 1 | 1.5 | 1.5 |
| (F-Comp.1) | - | - | 1.5 | - | - | - | - | - |
| (F-Comp.2) | - | - | - | 1.5 | - | - | - | - |

[Table 2]

| Property | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Flop index | 12.4 | 12.1 | 12.6 | 13.6 | 12.3 | 12.5 | 13.5 | 12 | 13.9 | 12 | 12 |
| Weld line | 1 | 1 | 1 | 2 | 1 | 1 | 1 | 1 | 1 | 1 | 1 |
| Dimensional stability | 0.3 | 0.3 | 0.3 | 0.3 | 0.2 | 0.3 | 0.3 | 0.3 | 0.3 | 0.3 | 0.3 |
| Flame retardancy | V-0 | V-0 | V-0 | V-0 | V-0 | V-0 | V-0 | V-0 | V-0 | V-0 | V-0 |
| Heat resistance (°C) | 83 | 88 | 80 | 87 | 85 | 84 | 82 | 83 | 83 | 80 | 92 |
| Impact strength, Unnotched | 72 | 77 | 70 | 84 | 75 | 73 | 95 | 88 | 71 | 95 | 71 |
| Melt index | 40 | 35 | 46 | 42 | 39 | 44 | 46 | 39 | 42 | 45 | 37 |

[Table 2] (continued)

| Property | Comparative Example | | | | | | | |
|---|---|---|---|---|---|---|---|---|
| | 1 | 2 | 3 | 4 | 5 | 6 | 7 | 8 |
| Flop index | 12.4 | 11.8 | 13.7 | 8.8 | 9.7 | 11.4 | 13.4 | 8.7 |
| Weld line | 1 | 1 | 4 | 1 | 5 | 1 | 1 | 1 |
| Dimensional stability | 0.3 | 0.5 | 0.6 | 0.2 | 0.3 | 0.3 | 0.4 | 0.3 |
| Flame retardancy | V-1 | V-0 | V-0 | V-0 | V-0 | V-0 | V-2 | V-0 |
| Heat resistance (°C) | 83 | 76 | 80 | 87 | 82 | 84 | 69 | 83 |
| Impact strength, Unnotched | 86 | 33 | 55 | 66 | 51 | 48 | 110 | 72 |

(continued)

| Property | Comparative Example | | | | | | | |
|---|---|---|---|---|---|---|---|---|
| | 1 | 2 | 3 | 4 | 5 | 6 | 7 | 8 |
| Melt index | 40 | 62 | 46 | 31 | 42 | 44 | 55 | 32 |

[Table 2] (continued)

| Property | Comparative Example | | | | | | | |
|---|---|---|---|---|---|---|---|---|
| | 9 | 10 | 11 | 12 | 13 | 14 | 15 | 16 |
| Flop index | 7.2 | 14.1 | 4.3 | 3.3 | 12.4 | 11.4 | 12.1 | 9.7 |
| Weld line | 1 | 2 | 1 | 1 | 1 | 4 | 1 | 3 |
| Dimensional stability | 0.3 | 0.3 | 0.3 | 0.3 | 0.3 | 0.3 | 0.3 | 0.5 |
| Flame retardancy | V-0 | V-0 | V-0 | V-0 | V-1 | V-2 | V-0 | V-1 |
| Heat resistance (°C) | 83 | 82 | 82 | 83 | 72 | 91 | 85 | 78 |
| Impact strength, Unnotched | 88 | 62 | 57 | 38 | 63 | 59 | 67 | 89 |
| Melt index | 41 | 44 | 41 | 42 | 48 | 32 | 38 | 35 |

As can be seen from Table 2 above, the resin compositions of Examples 1 to 11 according to the present invention all exhibited excellent metal-like texture (Flop index value of 12 or more) and excellent appearance (weld line score of 2 or less), and at the same time, their dimensional stability (mold shrinkage ratio of 0.3% or less), flame retardancy (V-0 grade), heat resistance (heat distortion temperature of 80°C or higher), unnotched impact strength (70 kgf*cm/cm or more), and melt index (35 or more) were all well-balanced. To the contrary, in the case of the compositions of Comparative Examples 1 to 16, one or more of the measured properties were inferior to those of Examples, and in particular, the metal-like texture, appearance (weld line score), dimensional stability, flame retardancy, heat resistance, and impact strength were unbalanced as compared with those of Examples, which may seriously deteriorate various properties of the final product.

## Claims

**1.** A thermoplastic resin composition with metal-like texture, comprising:
(A) a polycarbonate resin; (B) an acrylonitrile-butadiene-styrene resin; (C) a flame retardant; (D) a coal ash filler; (E) a block copolymer comprising (meth)acrylic acid ester-based unit; and (F) plate-shaped metal particles,

wherein, based on total 100 parts by weight of the composition,
the amount of said component (A) is from more than 41.5 parts by weight to less than 71 parts by weight,
the amount of said component (B) is from more than 5 parts by weight to less than 20 parts by weight,
the amount of said component (C) is from more than 9 parts by weight to less than 17 parts by weight,
the amount of said component (D) is from more than 8 parts by weight to less than 20 parts by weight,
the amount of said component (E) is from more than 1 part by weight to less than 8 parts by weight, and
the amount of said component (F) is from more than 0.5 part by weight to less than 3 parts by weight.

**2.** The thermoplastic resin composition of claim **1,** wherein the polycarbonate resin is an aromatic polycarbonate resin.

**3.** The thermoplastic resin composition of claim **1,** wherein the acrylonitrile-butadiene-styrene resin is acrylonitrile-butadiene-styrene resin, modified acrylonitrile-butadiene-styrene resin, or a mixture thereof.

**4.** The thermoplastic resin composition of claim 1, wherein the flame retardant is non-halogenated flame retardant.

**5.** The thermoplastic resin composition of claim 1, wherein the coal ash filler is that treated with alkyl silane.

**6.** The thermoplastic resin composition of claim 1, wherein the block copolymer comprising (meth)acrylic acid ester-based unit is a triblock copolymer of poly(methyl methacrylate)/poly(n-butyl acrylate)/poly(methyl methacrylate).

**7.** The thermoplastic resin composition of claim 1, wherein the plate-shaped metal particles is aluminum or an aluminum-based alloy.

**8.** A molded article comprising the thermoplastic resin composition of any one of claims 1 to 7.

【FIGURE 1】

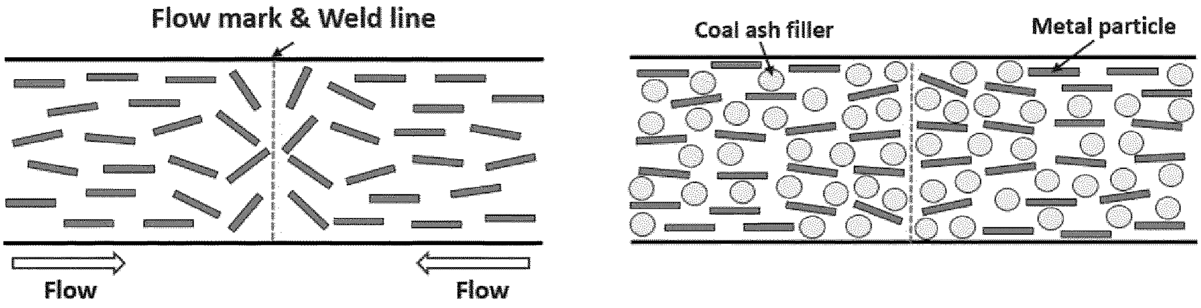


【FIGURE 2】

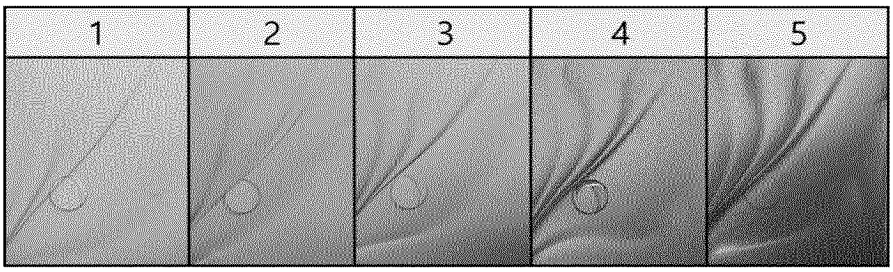


【FIGURE 3】

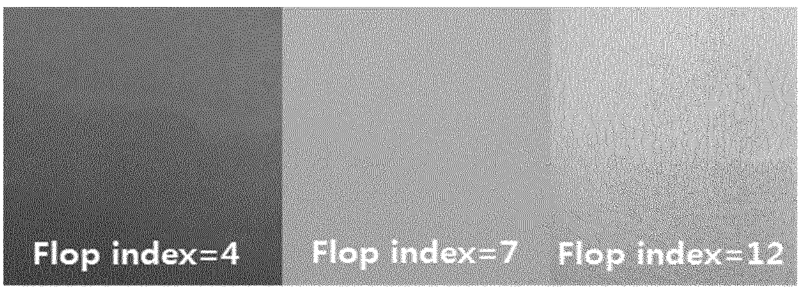

## INTERNATIONAL SEARCH REPORT

International application No.
**PCT/KR2024/002313**

### A. CLASSIFICATION OF SUBJECT MATTER

**C08L 69/00**(2006.01)i; **C08L 55/02**(2006.01)i; **C08L 53/00**(2006.01)i; **C08K 3/04**(2006.01)i; **C08K 3/08**(2006.01)i; **C08K 7/00**(2006.01)i; **C08K 9/04**(2006.01)i

According to International Patent Classification (IPC) or to both national classification and IPC

### B. FIELDS SEARCHED

Minimum documentation searched (classification system followed by classification symbols)

C08L 69/00(2006.01); B33Y 70/10(2020.01); C08J 5/00(2006.01); C08K 3/013(2018.01); C08K 3/08(2006.01); C08K 3/105(2018.01); C08L 67/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리카보네이트(polycarbonate), 아크릴로니트릴-부타디엔-스티렌(acrylonitrile-butadiene-styrene, ABS), 필러(filler), 난연제(flame retardant), 금속입자(metal particles), 열가소성(thermoplastic), 비회(fly ash)

### C. DOCUMENTS CONSIDERED TO BE RELEVANT

| Category* | Citation of document, with indication, where appropriate, of the relevant passages | Relevant to claim No. |
|---|---|---|
| A | KR 10-2019-0072147 A (SAMYANG CORPORATION) 25 June 2019 (2019-06-25) See claims 1-8. | 1-8 |
| A | KR 10-2015-0054036 A (SAMYANG CORPORATION) 20 May 2015 (2015-05-20) See claims 1-13. | 1-8 |
| A | KR 10-2020-0091371 A (SAMYANG CORPORATION) 30 July 2020 (2020-07-30) See claims 1-7. | 1-8 |
| A | KR 10-2022-0037545 A (SAMYANG CORPORATION) 25 March 2022 (2022-03-25) See claims 1-9. | 1-8 |
| A | KR 10-2020-0036718 A (LOTTE ADVANCED MATERIALS CO., LTD.) 07 April 2020 (2020-04-07) See claims 1-13. | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 May 2024** | **30 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/002313**

| Patent document cited in search report | Publication date (day/month/year) | Patent family member(s) | Publication date (day/month/year) |
|---|---|---|---|
| KR 10-2019-0072147 A | 25 June 2019 | KR 10-2020608 B1 | 10 September 2019 |
| KR 10-2015-0054036 A | 20 May 2015 | KR 10-1748243 B1 | 19 June 2017 |
| KR 10-2020-0091371 A | 30 July 2020 | KR 10-2019-0072123 A | 25 June 2019 |
| | | KR 10-2262931 B1 | 10 June 2021 |
| KR 10-2022-0037545 A | 25 March 2022 | None | |
| KR 10-2020-0036718 A | 07 April 2020 | CN 110964303 A | 07 April 2020 |
| | | CN 110964303 B | 29 April 2022 |
| | | KR 10-2365596 B1 | 21 February 2022 |
| | | US 2020-0102455 A1 | 02 April 2020 |

Form PCT/ISA/210 (patent family annex) (July 2022)